# FASCICULE DE BREVET EUROPEEN

(11) **EP 1 877 285 B1**
(45) Date de publication et mention de la délivrance du brevet: **25.11.2009**
(21) Numéro de dépôt: 06743827.5
(22) Date de dépôt: 21.04.2006
(51) Int. Cl.: B60R 19/22

(54) **AGENCEMENT D'UN DISPOSITIF D'ABSOPTION DE CHOCS POUR VEHICULE AUTOMOBILE**
ANORDNUNG FÜR KRAFTFAHRZEUGSTOSSDÄMPFER
ARRANGEMENT FOR MOTOR VEHICLE SHOCK ABSORBER

(30) Priorité: 27.04.2005 FR 0551093
(43) Date de publication de la demande: 16.01.2008
(73) Titulaire: Renault SAS, 92100 Boulogne Billancourt (FR); Perot, PAtrick, 78960 Voisins Le Bretonneux (FR)
(72) Inventeur: DO NASCIMENTO, Silvino, F-78390 Bois D'arcy (FR); BRAULT, Christophe, F-78180 Montigny Le Bretonneux (FR)
(86) Numéro de dépôt international: PCT/FR2006/050370
(87) Numéro de publication internationale: WO 2006/114541

(56) Documents cités:
- EP-A- 0 462 450
- GB-A- 1 537 308
- US-A1- 2003 047 952

## Description

L'invention concerne un agencement d'un dispositif d'absorption de chocs pour véhicule automobile, dans lequel au moins un élément d'absorption de chocs est agencé entre une peau de bouclier et une traverse de structure, un jeu apte à permettre des opérations de montage étant ménagé entre l'élément d'absorption et la traverse.

US 2003/0047952 et GB 1537308 décrivent de tels agencements (selon le préambule de la revendication 1).

Dans un véhicule, un agencement d'un dispositif d'absorption de chocs comporte généralement un bouclier et une traverse entre lesquels se trouvent des éléments d'absorption de chocs. Il est de plus souvent nécessaire de conserver un jeu de l'ordre de quelques millimètres entre la traverse et les éléments d'absorption de façon qu'il soit possible de procéder à des opérations de montage sur le véhicule. Cependant, lorsqu'on exerce une pression sur le bouclier, dans le cas où, par exemple, un utilisateur appuie à l'aide de sa main sur la surface du bouclier, la paroi du bouclier a tendance à se déplacer en raison du jeu de montage existant entre la traverse et les éléments d'absorption. Or cela peut donner à l'utilisateur la sensation, bien évidemment infondée, que le dispositif est peu robuste ou mal fixé, par exemple, et lui laisser ainsi une mauvaise impression en termes de qualité perçue.

Pour résoudre ce problème, il est connu d'agencer un élément en mousse entre la traverse et les éléments d'absorption. L'élément en mousse est alors fixé sur la traverse au moyen d'adhésif double face. Cependant, ce système présente plusieurs inconvénients. Tout d'abord, il nécessite une opération supplémentaire qui consiste à fixer l'élément en mousse sur la traverse, ce qui augmente le temps de montage et les coûts. De plus, dans la mesure où il est désormais impératif d'améliorer la recyclabilité des véhicules, la fixation des mousses par adhésif ne facilite pas le tri des matériaux en fin de vie du véhicule. En outre, il peut aussi arriver parfois qu'une mousse ait une tenue médiocre dans le temps, ce qui peut entraîner la nécessité de changer la mousse, et ce, avec les difficultés décrites précédemment.

Afin de pallier ces inconvénients, l'invention a pour objet un agencement d'un dispositif d'absorption de chocs pour véhicule automobile dont la qualité perçue est améliorée de façon simple et peu onéreuse.

A cet effet, l'invention propose un agencement d'un dispositif d'absorption de chocs pour véhicule automobile du type cité ci-dessus, caractérisé en ce qu'un moyen de rattrapage de jeu, porté par une paroi de l'élément d'absorption, est agencé entre l'élément d'absorption et la traverse, de façon à limiter la déformation de la peau de bouclier lorsqu'elle est soumise à un effort modéré tout en permettant les opérations de montage.

Selon d'autres caractéristiques de l'invention:
- Le moyen de rattrapage de jeu est venu de matière sur l'élément d'absorption.
- Le moyen de rattrapage de jeu est une pièce rapportée.
- Le moyen de rattrapage de jeu est en matériau élastiquement déformable.
- Le moyen de rattrapage de jeu présente la forme d'un prisme droit creux d'axe X et de base sensiblement hexagonale, deux de ses faces étant parallèles à la paroi de l'élément d'absorption.
- Les faces du prisme parallèles à la paroi de l'élément d'absorption sont plus larges que les autres faces du prisme.
- L'axe X est orienté selon une direction sensiblement verticale de façon à permettre le démoulage de la pièce selon une direction verticale.

D'autres caractéristiques et avantages de l'invention apparaîtront à la lecture de la description d'exemples de réalisation d'un agencement d'un dispositif d'absorption de chocs pour véhicule automobile en référence aux dessins annexés dans lesquels :
- La figure 1 est une vue générale en perspective et en éclaté d'un agencement selon l'invention vu de l'intérieur du véhicule.
- La figure 2 est une vue schématique en coupe de dessus de l'agencement de la figure 1.

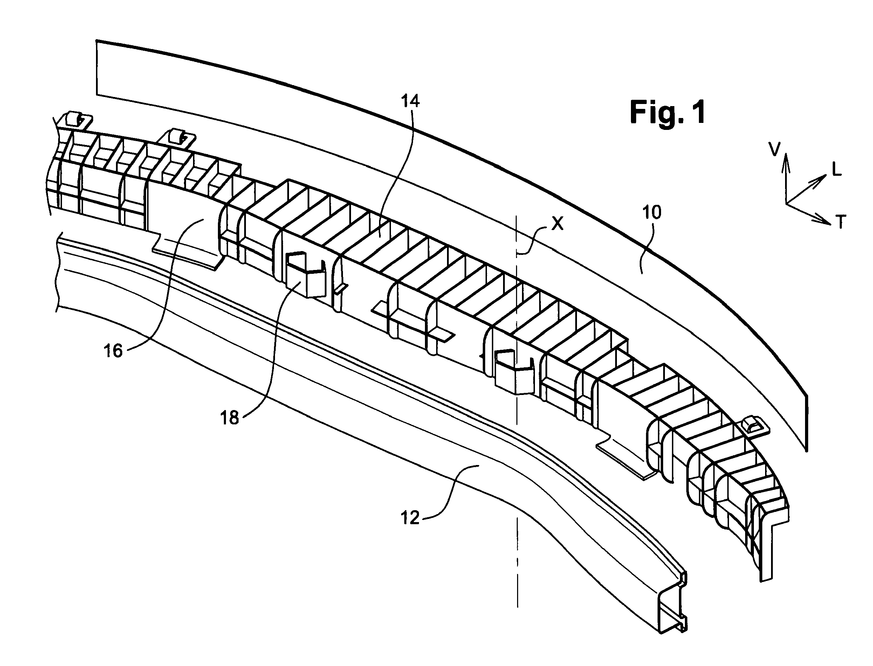

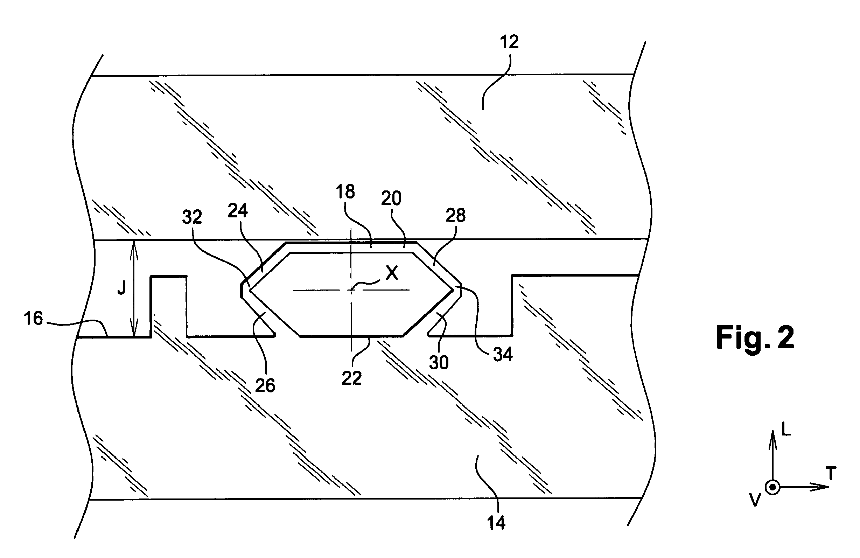

Dans la description qui suit, nous prendrons à titre non limitatif une orientation longitudinale, verticale et transversale indiquée par le trièdre L,V,T des figures 1 et 2.

Tel que représenté à la figure 1, un agencement d'un dispositif d'absorption de chocs pour véhicule automobile comporte une peau de bouclier 10 (représentée schématiquement) et un élément de structure tel qu'une traverse 12, entre lesquels est agencé un élément d'absorption 14. Dans le mode de réalisation décrit ici, l'élément d'absorption 14 présente la forme d'une poutre qui s'étend selon une direction transversale et qui est solidaire de la peau de bouclier 10.

Tel que représenté à la figure 2, afin de permettre certaines opérations de montage sur le véhicule, il existe un jeu J, de l'ordre de quelques millimètres entre la traverse 12 et l'élément d'absorption 14.

Un paroi 16 de l'élément d'absorption 14 porte un moyen de rattrapage de jeu 18 de façon qu'il soit agencé entre ledit élément d'absorption 14 et la traverse 12.

Le moyen de rattrapage 18 présente la forme d'un prisme droit creux d'axe X, dont les bases sont sensiblement hexagonales convexes. Deux faces opposées 20 et 22 du prisme sont parallèles à la paroi 16 de l'élément d'absorption 14, la face 20 étant en contact avec la traverse 12. Deux faces adjacentes 24 et 26 ont une zone de jonction notée 32 et deux autres faces adjacentes 28 et 30 ont une zone de jonction notée 34.

Le moyen de rattrapage 18 est en matériau déformable élastiquement et peut être venu de matière sur la paroi 16 de l'élément d'absorption 14 ou bien être rapporté par vissage, ce qui permet de livrer l'élément d'absorption 14 directement en bord de chaîne. Ainsi il n'est pas nécessaire lors du montage d'effectuer d'opération supplémentaire, le moyen de rattrapage de jeu 18 étant déjà en place.

Dans le cas où le moyen de rattrapage de jeu 18 est moulé avec l'élément d'absorption 14, l'axe X du prisme est orienté sensiblement selon une direction verticale de façon à permettre le démoulage selon une direction verticale de la pièce lors du processus de fabrication de l'élément d'absorption 14.

Les dimensions des deux faces 20 et 22 peuvent être supérieures à celles des autres faces 24, 26, 28 et 30 du prisme, de façon à augmenter la surface en contact avec la traverse 12.

Ainsi, lorsqu'il est nécessaire de procéder à une opération de montage, l'élément de rattrapage de jeu 18 peut se déformer élastiquement selon une direction longitudinale lors d'un appui sur l'élément d'absorption 14, par exemple, par pliage du moyen de rattrapage 18 au niveau des zones de jonction 32 et 34, puis revenir à sa forme initiale.

Cependant, lorsqu'un appui est exercé sur la peau de bouclier 12 par un individu au moyen de sa main, l'effort n'est alors pas suffisant pour déformer le moyen de rattrapage de jeu 18. La peau de bouclier 12 ne se déforme donc pas sous l'effet d'un tel appui que l'on peut considérer comme modéré, ce qui améliore la qualité perçue du véhicule.

## Revendications

1. Agencement d'un dispositif d'absorption de chocs pour véhicule automobile, dans lequel au moins un élément d'absorption de chocs (14) est agencé entre une peau de bouclier (10) et une traverse de structure (12), un jeu (J) apte à permettre des opérations de montage étant ménagé entre l'élément d'absorption (14) et la traverse (12), **caractérisé en ce qu'**un moyen de rattrapage de jeu (18), porté par une paroi (16) de l'élément d'absorption (14), est agencé entre l'élément d'absorption (14) et la traverse (12), de façon à limiter la déformation de la peau de bouclier (10) lorsqu'elle est soumise à un effort modéré tout en permettant les opérations de montage.

2. Agencement d'un dispositif d'absorption de chocs selon la revendication précédente, **caractérisé en ce que** le moyen de rattrapage de jeu (18) est venu de matière sur l'élément d'absorption (14).

3. Agencement d'un dispositif d'absorption de chocs selon la revendication 1, **caractérisé en ce que** le moyen de rattrapage de jeu (18) est une pièce rapportée.

4. Agencement d'un dispositif d'absorption de chocs selon l'une quelconque des revendications précédentes, **caractérisé en ce que** le moyen de rattrapage de jeu (18) est en matériau élastiquement déformable.

5. Agencement d'un dispositif d'absorption de chocs selon l'une quelconque des revendications précédentes, **caractérisé en ce que** le moyen de rattrapage de jeu (18) présente la forme d'un prisme droit creux d'axe (X) et de base sensiblement hexagonale, deux de ses faces (20,22) étant parallèles à la paroi (16) de l'élément d'absorption (14).

6. Agencement d'un dispositif d'absorption selon la revendication précédente, **caractérisé en ce que** les faces (20,22) du prisme parallèles à la paroi (16) de l'élément d'absorption (14) sont plus larges que les autres faces (24,26,28,30) du prisme.

7. Agencement d'un dispositif d'absorption de chocs selon l'une quelconque des revendications 5 ou 6, **caractérisé en ce que** l'axe (X) est orienté selon une direction sensiblement verticale de façon à permettre le démoulage de la pièce selon une direction verticale.

## Claims

1. Arrangement of a shock absorption device for a motor vehicle, in which at least one shock absorption element (14) is arranged between a bumper skin (10) and a structural crossmember (12), a clearance (J) designed to allow mounting operations being formed between the absorption element (14) and the crossmember (12), **characterized in that** a clearance compensation means (18), which is carried by a wall (16) of the absorption element (14), is arranged between the absorption element (14) and the crossmember (12) so as to limit the deformation of the bumper skin (10) when it is subjected to a moderate force while at the same time allowing the mounting operations.

2. Arrangement of a shock absorption device according to the preceding claim, **characterized in that** the clearance compensation means (18) is formed integrally on the absorption element (14).

3. Arrangement of a shock absorption device according to Claim 1, **characterized in that** the clearance compensation means (18) is an attached part.

4. Arrangement of a shock absorption device according to any one of the preceding claims, **characterized in that** the clearance compensation means (18) is made of elastically deformable material.

5. Arrangement of a shock absorption device according to any one of the preceding claims, **characterized in that** the clearance compensation means (18) has the shape of a hollow right prism of axis (X) and of substantially hexagonal base, two of its faces (20, 22) being parallel to the wall (16) of the absorption element (14).

6. Arrangement of an absorption device according to the preceding claim, **characterized in that** the faces (20, 22) of the prism which are parallel to the wall (16) of the absorption element (14) are wider than the other faces (24, 26, 28, 30) of the prism.

7. Arrangement of a shock absorption device according to either one of Claims 5 and 6, **characterized in that** the axis (X) is oriented in a substantially vertical direction so as to allow the part to be removed from the mold in a vertical direction.

## Patentansprüche

1. Anordnung einer Stoßfängervorrichtung für ein Kraftfahrzeug, bei der mindestens ein Stoßfängerelement (14) zwischen einer Stoßfängerschale (10) und einem Strukturquerträger (12) angeordnet ist, wobei ein Spielraum (J), der Einbauvorgänge ermöglicht, zwischen dem Stoßfängerelement (14) und dem Querträger (12) vorgesehen ist, **dadurch gekennzeichnet, dass** eine Spielausgleichseinrichtung (18), die von einer Wand (16) des Stoßfängerelements (14) getragen wird, zwischen dem Stoßfängerelement (14) und dem Querträger (12) angeordnet ist, um die Verformung der Stoßfängerschale (10) zu begrenzen, wenn sie einer mäßigen Krafteinwirkung ausgesetzt wird, und gleichzeitig die Einbauvorgänge zu erlauben.

2. Anordnung einer Stoßfängervorrichtung nach dem vorhergehenden Anspruch, **dadurch gekennzeichnet, dass** die Spielausgleichseinrichtung (18) aus dem gleichen Material wie das Stoßfängerelement (14) besteht.

3. Anordnung einer Stoßfängervorrichtung nach Anspruch 1, **dadurch gekennzeichnet, dass** die Spielausgleichseinrichtung (18) ein angesetztes Bauteil ist.

4. Anordnung einer Stoßfängervorrichtung nach einem der vorhergehenden Ansprüche, **dadurch gekennzeichnet, dass** die Spielausgleichseinrichtung (18) aus einem elastisch verformbaren Material ist.

5. Anordnung einer Stoßfängervorrichtung nach einem der vorhergehenden Ansprüche, **dadurch gekennzeichnet, dass** die Spielausgleichseinrichtung (18) die Form eines geraden Hohlprismas mit einer Achse (X) und mit einer im Wesentlichen sechseckigen Basis hat, wobei zwei ihrer Seiten (20, 22) parallel zur Wand (16) des Stoßfängerelements (14) sind.

6. Anordnung einer Stoßfängervorrichtung nach dem vorhergehenden Anspruch, **dadurch gekennzeichnet, dass** die Seiten (20, 22) des Prismas parallel zur Wand (16) des Stoßfängerelements (14) breiter als die anderen Seiten (24, 26, 28, 30) des Prismas sind.

7. Anordnung einer Stoßfängervorrichtung nach einem der Ansprüche 5 oder 6, **dadurch gekennzeichnet, dass** die Achse (X) gemäß einer im Wesentlichen senkrechten Richtung ausgerichtet ist, um das Ausformen des Bauteils gemäß einer senkrechten Richtung zu ermöglichen.
